# EUROPÄISCHE PATENTANMELDUNG

(11) **EP 1 061 020 A1**
(43) Veröffentlichungstag der Anmeldung: **20.12.2000**
(21) Anmeldenummer: 99111551.0
(22) Anmeldetag: 15.06.1999
(51) Int. Cl.: B65H 5/04, B65H 5/22, B65H 31/34, B65H 29/38, B65G 47/84, B65H 29/32, B65H 3/08

(54) **Grubenlose Einrichtung zum Beschicken und Entsorgen von Bearbeitungsstrassen für flächige Werkstücke**

(71) Anmelder: Systraplan Gesellschaft für Planung und Bau von materialflusstechnischen Anlagen mbH u. Co. KG, 32052 Herford (DE)
(72) Erfinder: Hans Jostmeier, Dr.-Ing, 32049 Herford (DE)

(57) **Zusammenfassung**

Die Einrichtung besteht aus Hubplattformen (2), die dafür sorgen, daß die Werkstücke des Stapels (1) vom selben Niveau abgestapelt werden. Mit Hilfe von stationären Hebe-bzw. Abstoßgeräten (3) werden die Werkstücke dem umlaufenden Saugriemensystem (4) zugeführt bzw. von ihm abgestoßen. Der Rotationsübersetzer (5) übernimmt die Werkstücke und gibt sie an die Einlaufrollenbahn (6) bzw. nimmt die Teile von einer Auslaufrollenbahn auf und übergibt sie an das Saugriemensystem.

## Beschreibung

Die Erfindung betrifft eine Vorrichtung, mit der Pakete flächenförmiger Werkstücke, die lagenweise geschichtet sind und deren oberes Niveau sich von der Arbeitshöhe einer Bearbeitungsstraße stark unterscheidet, vereinzelt (abgestapelt) oder in umgekehrter Weise ein Stapel aus einzeln aus einer Bearbeitungsstraße ankommenden Teilen gebildet wird.

Im Falle einer Vereinzelungs- und Beschickvorrichtung ist der Stapel auf einer Hubplatfform positioniert, die imstande ist, das jeweils obere Werkstück oder jeweils eine Lage von mehreren zu einem Bild zusammengefaßten Werkstücken auf dasselbe Arbeitsniveau bei Entnahme des oberen Werkstückes oder Werkstückbildes nachzuheben.

Die Vereinzelung selbst nach oben durch Abheben kann dabei z.B. mit Hilfe von pneumatisch betätigten Saugern oder anderen Greifeinrichtungen geschehen.

Mit Hilfe dieser Einrichtungen werden die Werkstücke gegen ein angetriebenes Riemensystem mit horizontalen Ober- und Untertrum gezogen, deren Riemen mit einer Vielzahl von Saugnäpfen oder saugnapfartigen Kammern bestückt sind, die sektionsweise mit Vakuum beaufschlagt bzw. belüftet werden können. Die Werkstücke haften dann an diesem System, können aber auch wieder vom Riemensystem getrennt werden und damit abfallen.

Da die zu vereinzelnden Stapel zum Einlaufsystem in die Bearbeitungsstraße seitlich versetzt angeordnet sind, müssen die vereinzelten Teile in seitliche Richtung gefördert werden. Dieses geschieht durch ein umlaufendes Saugriemensystem, das die vereinzelten Teile an einem Ende aufnehmen und am anderen Ende durch Belüftung der entsprechenden Sauger abgeben kann. Im Falle von magnetisierbaren Werkstücken kann auch mit einem umlaufenden Riemensystem und oberhalb des Riemenuntertrums angeordneten Magnetelementen gearbeitet werden.

Um die unterschiedlichen Niveauhöhen des zuvor beschriebenen Riemensystems zum seitlichen Transport und des Einlaufsystems der Bearbeitungsstraße zu überwinden, wird das rotierende Transportsystem zum Übersetzen von Werkstücken entsprechend Gebrauchsmuster "Grubenlose Einrichtung zum Beschicken und Entsorgen von Bearbeitungsstraßen für flächige Werkstücke" eingesetzt. Mit diesem Übersetzer, der gleichzeitig die waagerechte Lage der Werkstücke beibehält und die unterschiedlichen Höhenniveaus überwindet, werden die Werkstücke an das Einlaufsystem der Bearbeitungsstraße abgegeben, um letzterer zugeführt zu werden.

Im Falle einer Stapelbildung geschehen die Operationen in umgekehrter Reihenfolge, d.h. die aus der Bearbeitungsstraße ankommenden Teile oder zu Bildern gesammelten Teile werden mit Hilfe des Rotationsübersetzers auf ein höheres Niveau gebracht, an das zur Seite fördernde Riemensystem übergeben und in bestimmter Position, die oberhalb der nach unten taktbaren Hubplattform angeordnet ist, zwecks Stapelbildung abgegeben.

Aus der Praxis sind die einzelnen Aggregate der beschriebenen Abstapel- bzw. Stapeleinrichtung bekannt, jedoch nicht die der Erfindung zugrunde liegende Kombination, die gewährleistet, daß hohe Werkstücktaktzahlen bei Verzicht auf Gruben für die Hubplattform realisiert werden können.

Die auf dem Markt befindlichen Systeme arbeiten in der Regel für den seitlichen und den Höhen überwindenden Transport mit reversierenden Systemen, die unter Zeitverlust einen leeren Rückhub machen müssen, so daß die Leistungsfähigkeit des beschriebenen Systems bezüglich Taktzahl erheblich größer ist.

Aufgabe der Erfindung ist es, durch Kombination von bekannten Aggregaten eine leistungsfähige Einrichtung zu schaffen, die bei Verzicht auf Gruben Teile abstapeln und einer Bearbeitungsstraße zuführen kann bzw. am Ende einer solchen Straße stapeln kann.

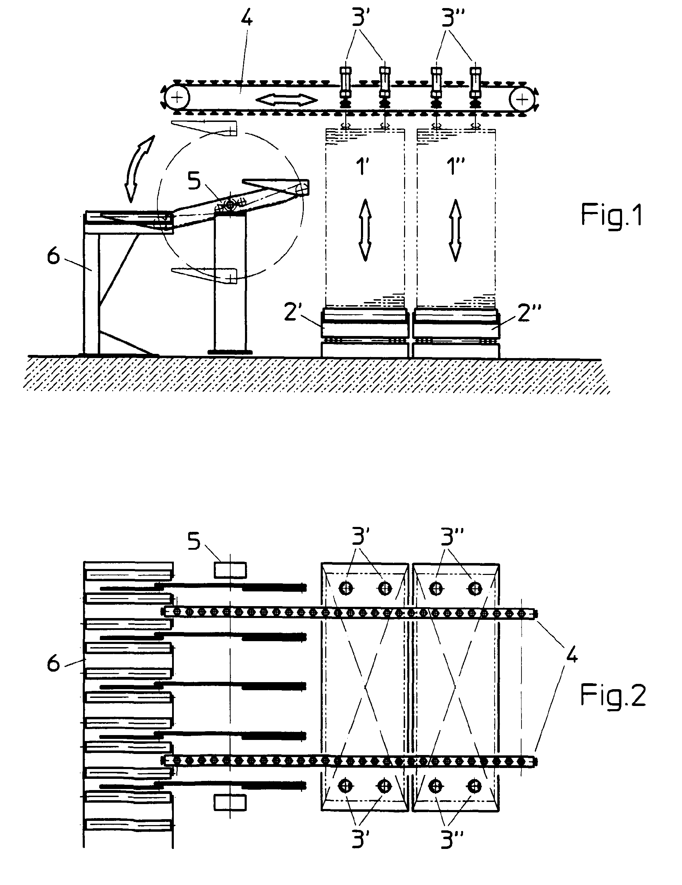

Das Grundprinzip eines solchen Systems ist im einzelnen in den Fig. 1 und 2 dargestellt.

Die Stapel 1' bzw. 1", die sich auf den Hubplattformen 2' und 2" befinden, werden bei abnehmender Stapelhöhe nach oben getaktet, so daß das jeweils obere Werkstück sich auf demselben Abnahmeniveau befindet. Sinnvollerweise sind zwei Hubplattformen angeordnet, so daß bei vollständiger Vereinzelung eines Stapels ohne Zeitverlust die zweite in Aktion treten kann, um keinen Zeitverlust zu haben. Zwischenzeitlich kann dann die leere Hubplattform mit einem neuen Stapel beschickt werden.

Mit Hilfe der Hebegeräte 3' und 3" werden die Werkstücke vom Stapel abgehoben und an das umlaufende zur Seite fördernde Riemensystem 4 übergeben. Am Ende des Riemensystems übernimmt der Rotationsübersetzer 5 die Werkstücke und legt sie auf einer Rollenbahn 6 ab.

## Patentansprüche

1. Grubenlose Einrichtung zum Beschicken (Abstapeln) und Entsorgen (Stapeln) von Bearbeitungsstraßen für flächige Werkstücke dadurch gekennzeichnet, daß grubenlose Hubplattformen, Hebe- bzw. Abstoßgeräte mit einem umlaufenden Saugriemensystem und einem Rotationsübersetzer und einer Ein- bzw. Auslaufrollenbahn zu einem System kombiniert werden, das imstande ist mit hoher Taktzahl zu arbeiten.

2. Einrichtung nach Anspruch 1 dadurch gekennzeichnet, daß im Fall einer Stapeleinrichtung nach dem Abstoßen der Werkstücke vom umlaufenden Riemensystem separate Ausrichteinheiten in Aktion treten, um auf den Hubplattformen kantengerade Stapel zu bilden.
